# EUROPÄISCHE PATENTANMELDUNG

(11) **EP 4 040 366 A1**
(43) Veröffentlichungstag der Anmeldung: **10.08.2022**
(21) Anmeldenummer: 22155001.5
(22) Anmeldetag: 03.02.2022
(51) Int. Cl.: G06Q 30/06

(54) **VERFAHREN ZUR ERSTELLUNG EINER ELEKTRONISCHEN ANGEBOTSLISTE**

(30) Priorität: 09.02.2021 AT 500782021
(71) Anmelder: Denner, Marcus, 3433 Königstetten (AT)
(72) Erfinder: Denner, Marcus, 3433 Königstetten (AT)
(74) Vertreter: Puchberger & Partner Patentanwälte

(57) **Zusammenfassung**

Die Erfindung betrifft ein computerimplementiertes Verfahren zur Erstellung einer elektronischen Angebotsliste (1) durch einen Server-Computer (2) zur Übermittlung an einen Client-Computer (3, 3', 3"), ein computerlesbares Speichermedium mit Anweisungen, die einen Server-Computer (2) zur Ausführung eines derartigen Verfahrens veranlassen, sowie eine Vorrichtung zur Durchführung eines derartigen Verfahrens.

## Beschreibung

Die Erfindung betrifft ein computerimplementiertes Verfahren zur Erstellung einer elektronischen Angebotsliste durch einen Server-Computer zur Übermittlung an einen Client-Computer.

Aus dem Stand der Technik sind Verfahren zur Erstellung von elektronischen Angebotslisten bekannt, insbesondere zur Aggregation und Bereitstellung von Angeboten verschiedener Anbieter, insbesondere Liefer- und Zustelldienste, beispielsweise für die Lieferung von Waren, Lebensmitteln oder Essen, aber auch für die Abholung von Waren. Derartige Verfahren sind im B2C- und B2B-Bereich bekannt (beispielsweise für Versandartikel oder bei Restaurants), aber auch zunehmend im industriellen Bereich verbreitet. Anwendungsbereiche sind etwa die Lieferung von Ersatzteilen aus einem von mehreren Warenlagern für einen industriellen Prozess, beispielsweise im Bereich des Maschinenbaus, oder die Lieferung von Rohstoffen für die industrielle Fertigung von Waren in einem Fabrikgelände. Bei derartigen Verfahren erfolgt zunächst die Eingabe einer Anforderung nach einer Produktgattung, die von einem Client-Computer (beispielsweise einem PC oder Smartphone) an einen Server-Computer gesendet wird, sei es zur Lieferung oder zur Abholung. In der Regel sind die zur Abgabe von Anforderungen berechtigten Benutzer in einer Benutzerdatenbank des Server-Computers abgespeichert, welche meist auch den Standort bzw. die Adresse des Benutzers umfasst.

Sofern eine Lieferung der angeforderten Produktgattung gewünscht wird (Lieferdienste), bezieht der Server-Computer auf Grundlage der Benutzerdaten den Lieferbereich Lᵢ, der dem Benutzer bzw. dessen Client-Computer zugeordnet ist. Beim Lieferbereich kann es sich um bestimmte Regionen, Straßen, Bezirke, Städte, Bundesländer, oder auch Staaten handeln; die Anzahl der Lieferbereiche i = 1, 2, ..., N kann beliebig sein. Der Server-Computer ermittelt dann zumindest einen Anbieter Aⱼ, der sich im Liefergebiet Lⱼ befindet und bei dem der Benutzer in Folge das gewünschte Produkt P ordern kann. Zu diesem Zweck fragt der Server-Computer eine vorab erstellte AnbieterDatenbank ab. Die Anbieter können also durch Angabe der Lieferadresse ermittelt werden. Dabei können gegebenenfalls auch die Lieferkosten pⱼ des Anbieters Aⱼ in den Lieferbereich Lᵢ abgefragt werden.

Die Anzahl der Anbieter j = 1, 2, ..., M, die beim Server-Computer als teilnehmende Anbieter hinterlegt sind, ist grundsätzlich nicht limitiert; es können in jedem Lieferbereich eine beliebige Anzahl von Anbietern Aⱼ vorgesehen sein.

Schließlich stellt der Server-Computer die ermittelten Anbieter Aⱼ, gegebenenfalls beschränkt auf den betreffenden Lieferbereich Lᵢ, in einer elektronischen Angebotsliste zusammen und übermittelt diese Angebotsliste an den Client-Computer. Der Benutzer kann dann aus der Angebotsliste den gewünschten Anbieter auswählen, beispielsweise an Hand positiver Bewertungen anderer Kunden, des Preisniveaus, oder der Lieferkosten. Nach Übermittlung der elektronischen Angebotsliste nimmt der Server-Computer von einem Client-Computer eine Bestellung entgegen beauftragt in einem weiteren Schritt den vom Benutzer ausgewählten Anbieter Aⱼ durch Übermittlung einer elektronischen Nachricht an den zugeordneten Anbieter-Computer mit der Lieferung des gewünschten Produktes P an den betreffenden Benutzer.

Der Kunde entscheidet sich also zunächst für einen Anbieter, und danach erfolgt die Produktauswahl und die Order. Sofern keine Lieferung, sondern Abholung gewünscht wird, ist der Lieferbereich Lᵢ nicht relevant, sodass der Server-Computer sämtliche in seiner Datenbank befindlichen Anbieter Aⱼ, unabhängig von ihrem Liefergebiet, ungefiltert in der Angebotsliste bereitstellt.

Derartige bekannte Verfahren leiden jedoch darunter, dass oftmals eine Vielzahl überlappender Anfragen an den Server-Computer zur gleichen Zeit eintreffen. Dies kann verschiedenste Gründe haben. Beispielsweise häufen sich Bestellungen bei Lieferdiensten zu bestimmten Zeiten; auch Anfragen nach Ersatzteilen in einem Warenlager treten gehäuft zum Beginn einer Schicht auf.

Dies führt einerseits zu einer temporären technischen Überlastung der Anbieter-Computer. Insbesondere stellt sich aber auch das Problem, dass auf Seiten der Anbieter die Bereitstellung der bestellten Waren einen beträchtlichen Aufwand verursachen, beispielsweise in Bezug auf die verwendeten Ressourcen und Zustellmittel. In Stoßzeiten entstehen folglich hohe Verzögerungen bei der Bereitstellung und gegebenenfalls Auslieferung der Produkte. Ferner besteht auch das Problem, dass Bestellungen bei herkömmlichen Verfahren nicht steuerbar sind. Es kann der Fall auftreten, dass eine Lieferung gerade unterwegs ist, um eine Order in einem Lieferbereich zu erfüllen, während eine weitere Order in genau diesem Lieferbereich eintrifft. Es müsste eine zweite Lieferung gestartet werden.

Diese und andere Probleme werden erfindungsgemäß mit Verfahren und Vorrichtungen gemäß der unabhängigen Patentansprüche behoben.

Ein erfindungsgemäßes Verfahren wird auf dem Server-Computer ausgeführt und umfasst mehrere Schritte. Vorab wird am Server-Computer eine aktualisierbare Bestellzeitdatenbank bereitgestellt. In der Bestellzeitdatenbank wird beim Einlangen einer Bestellung bei einem Anbieter Aⱼ ein zeitlich befristetes Bestellzeitfenster Tⱼ erstellt und in Folge für weitere Bestellungen bei diesem Anbieter bereitgehalten. Über die Dauer des Bestellzeitfensters Tⱼ werden Bestellungen beim betreffenden Anbieter Aⱼ gesammelt und bereitgestellt; am Ende des Bestellzeitfensters werden die Bestellungen ausgeliefert bzw. zur Abholung bereitgestellt.

Die Bestellzeitfenster Tⱼ sind als eigens zu diesem Zweck am Server-Computer implementierte Datenobjekte ausgeführt und gespeichert. Die Bestellzeitdatenbank beinhaltet alle aktiven (offenen) Bestellzeitfenster Tⱼ der Anbieter Aⱼ. Die Bestellzeitdatenbank ist zu Beginn des Verfahrens leer und wird im Zuge des Verfahrens vom Server-Computer gefüllt, sobald erste Bestellungen einlangen.

Die Parameter der Bestellzeitfenster, wie beispielsweise Zeitdauer Δt, Anzahl möglicher Bestellungen pro Bestellzeitfenster Kⱼ und Anzahl möglicher Waren pro Order können von den Anbietern Aⱼ definiert werden.

Die Bestellzeitfenster beinhalten zumindest eine Beginnzeit tₛₜₐᵣₜ und eine Endzeit t_{end} eines Bestellzeitraums des betreffenden Anbieters. Die Beginnzeit tₛₜₐᵣₜ wird mit der ersten abgeschlossenen Bestellung am Server gesetzt. Die Endzeit t_{end} richtet sich nach dem vom jeweiligen Anbieter angegebenen Bestellzeitraum Δt, beispielsweise 12, 15 oder 20 Minuten, d.h. t_{end} = tₛₜₐᵣₜ + Bestellzeitraum. Der jeweilige Anbieter kann bei der Wahl der Länge des Bestellzeitraums Δt insbesondere auch die typische Produktionszeit der von ihm angebotenen Produkte berücksichtigen.

Der Server-Computer prüft durch Abfrage der Bestellzeitdatenbank, ob für die eingangs ermittelten Anbieter Aⱼ bereits ein offenes Bestellzeitfenster Tⱼ vorhanden ist. Die Prüfung kann erfolgen, indem geprüft wird, ob zum aktuellen Zeitpunkt t eines der Bestellzeitfenster Tⱼ noch offen ist, also die Bedingung tₛₜₐᵣₜ ≤ t < t_{end} gültig ist.

Falls zum Zeitpunkt t ein Bestellzeitfenster Tⱼ offen ist, wird dieses Bestellzeitfenster Tⱼ und der betreffende Anbieter Aⱼ in die Angebotsliste aufgenommen. Falls noch kein Bestellzeitfenster Tⱼ für einen der Anbieter existiert, wird dieser Anbieter ebenfalls in die Angebotsliste aufgenommen - mit der ersten getätigten Bestellung bei diesem Anbieter kann ein Bestellzeitfenster Tⱼ geöffnet werden. Falls für einen Anbieter kein Bestellzeitfenster existiert, und auch kein Bestellzeitfenster erstellt werden kann, da dieser Anbieter bereits komplett ausgelastet ist oder die Bestellung außerhalb der Öffnungszeiten getätigt wird, kann bei diesem Anbieter keine Order abgegeben werden. Der Anbieter erscheint dann nicht in der Angebotsliste.

Erfindungsgemäß kann vorgesehen sein, dass in der Angebotsliste jene Anbieter Aj mit offenen Bestellzeitfenstern Tj nach oben gereiht werden. Dem Benutzer wird damit ein Anreiz geboten, seine Order zu einer bereits entgegengenommenen Order bei einem Anbieter Aⱼ anzuschließen.

Erfindungsgemäß kann ferner vorgesehen sein, dass in der Angebotsliste die Anbieter Aⱼ in der Reihenfolge der am frühesten endenden Bestellzeitfenster Tⱼ sortiert werden. Das bedeutet, die Sortierung erfolgt in der Reihenfolge von aufsteigendem t_{end} aller gerade offenen Bestellzeitfenster.

Anbieter, deren Bestellzeitfenster eine Endzeit t_{end} näher zum aktuellen Zeitpunkt t aufweisen, werden in der Angebotsliste also weiter oben angeführt, als Anbieter, deren Bestellzeitfenster eine Endzeit t_{end} weiter entfernt zum aktuellen Zeitpunkt t haben.

Anbieter, für die noch kein offenes Bestellzeitfenster vorhanden ist, werden unter allen Anbietern mit offenen Bestellzeitfenstern gereiht; für diese Anbieter kann von einem Benutzer die erste Order aufgegeben werden und somit ein Bestellzeitfenster geöffnet werden.

Die elektronische Angebotsliste wird an den Client-Computer übermittelt, und der Benutzer kann einen Anbieter auswählen, die gewünschten Produkte P ordern und die Bestellung abschließen. Dies kann insbesondere dazu führen, dass der Benutzer jenen Anbieter wählt, dessen Bestellzeitfenster möglichst bald endet, um seine Bestellung schnellstmöglich zu erhalten bzw. abholen zu können. Der Benutzer kann sich aber auch für jenen Anbieter entscheiden, dessen Bestellzeitfenster die längste noch verbleibende Restzeit hat, um genügend Zeit für die Auswahl der Produkte zu haben.

Auf Seiten der Anbieter wird durch die Reihung der Bestellzeitfenster in der Angebotsliste erreicht, dass jedes Bestellzeitfenster Tⱼ möglichst gut mit möglichst vielen Bestellungen ausgenutzt wird. Auch bei der Auslieferung führt das Verfahren zu technischen Vorteilen, da alle Orders, die innerhalb des Bestellzeitfensters Tⱼ abgegeben werden, in bestimmte Lieferbereiche gemeinsam transportiert werden können. Hingegen erhalten Anbieter, deren Bestellzeitfenster Tⱼ entweder aufgrund der maximalen Anzahl an möglichen Bestellungen pro Bestellzeitfenster Kⱼ bereits voll bzw. aufgrund t > t_{end} bereits geschlossen sind, keine neuen Bestellungen, sodass deren Server nicht überlastet werden.

Erfindungsgemäß kann vorgesehen sein, dass vom Server-Computer separate Bestellzeitfenster Tⱼ für die Lieferung von Produkten und Bestellzeitfenster Tⱼ' für die Abholung von Produkten bereitgestellt werden.

Erfindungsgemäß kann vorgesehen sein, dass die Bestellzeitfenster Tⱼ jeweils für eine Zeitdauer Δt angelegt werden, wobei die Zeitdauer Δt anbieterspezifisch ist und durch Abfrage der Anbieterdatenbank ermittelt wird.

Erfindungsgemäß kann vorgesehen sein, dass für die Bestellzeitfenster Tⱼ bzw. Tⱼ' eine maximale Anzahl Kⱼ an Bestellungen vorgesehen ist, wobei die Anzahl Kⱼ anbieterspezifisch ist und durch Abfrage der Anbieterdatenbank ermittelt wird, und wobei der Server-Computer prüft, ob die maximal vorgesehene Anzahl der Bestellungen in Bestellzeitfenstern Tⱼ die Buchung einer neuen Bestellung erlaubt.

Die Lieferung oder Abholung der bestellten Produkte beginnt erst mit dem Schließen des Bestellzeitfensters. Das bedeutet, innerhalb von beispielsweise 20 Minuten können Bestellungen gesammelt werden. Sobald diese 20 Minuten um sind bzw. die Anzahl an möglichen Orders erreicht ist und alle Produkte bereitgestellt wurden, beginnt der Anbieter mit der Auslieferung bzw. Bereitstellung für die Abholung.

Erfindungsgemäß kann vorgesehen sein, dass der Server-Computer beim Eingang der Order von einem Client-Computer einzelne oder alle in der Benutzerdatenbank enthaltenden Client-Computer aus dem Liefergebiet Lᵢ der Bestellung durch Übermittlung einer elektronischen Nachricht informiert und den Client-Computern gegebenenfalls die in diesem Liefergebiet Lᵢ bestehenden Bestellzeitfenster Tⱼ übermittelt. Dadurch wird den Benutzern im betreffenden Liefergebiet mitgeteilt, dass eine Bestellung von einem anderen Benutzer in ihrem Liefergebiet getätigt wurde, sodass sie sich daran beteiligen könnten.

Erfindungsgemäß kann vorgesehen sein, dass der Server-Computer beim Eingang einer Bestellung innerhalb eines Liefergebiets Li ein dem bestellenden Client-Computer zugeordnetes Subliefergebiete SLᵢ definiert, jene in der Benutzerdatenbank angeführten Client-Computer, die sich im Subliefergebiet SLᵢ befinden, durch Übermittlung einer elektronischen Nachricht von der Bestellung informiert, und diesen Client-Computern die in diesem Subliefergebiet SLᵢ offenen Bestellzeitfenster Tⱼ übermittelt. Erfindungsgemäß kann vorgesehen sein, dass der Server-Computer zur Bestimmung des Lieferbereichs Lᵢ und gegebenenfalls des Sublieferbereichs SLᵢ die Positionsdaten des Client-Computers, insbesondere GPS-Koordinaten, entgegennimmt, die entsprechende Adresse durch Abfrage einer externen Adressdatenbank ermittelt, und das Liefergebiet Lᵢ sowie gegebenenfalls das Subliefergebiet SLᵢ durch Abgleich der Adresse mit vorab in der Liefergebietdatenbank gespeicherten Liefergebietsadressen bestimmt. Dies hat insbesondere den Vorteil, dass Lieferungen an den aktuellen Standort eines mobilen Benutzers erfolgen können, und nicht nur an die in der Benutzerdatenbank hinterlegte Adresse des Benutzers. Erfolgt seitens des Client-Computers jedoch keine Standortfreigabe, so kann dennoch die angegebene Lieferadresse herangezogen werden und das Verfahren wird daher nicht beeinträchtigt.

Das erfindungsgemäße Verfahren kann als Computerprogramm, insbesondere als Computer-App implementiert sein. Die App kann eine Serverkomponente sowie Client-Komponenten und Anbieter-Komponenten umfassen. Die Client-Komponente kann Module zur Übermittlung der Anfragen an den Server, Darstellung der Angebotsliste, und Bestellung umfassen. Die Anbieter-Komponente kann Module zur Bereitstellung der Produkte und der Bestellzeitfenster an den Server und Entgegennahme der Bestellungen vom Server umfassen. Die Client-Computer können insbesondere als Smartphones ausgebildet sein. Die Anbieter-Computer können insbesondere als Smartphones, Tablets und/oder Desktop-PCs ausgebildet sein. Der Server-Computer kann ebenfalls als Desktop-PC ausgebildet sein. Die Verbindung der Computer kann vorzugsweise über das Internet erfolgen.

Die Erfindung umfasst ferner ein computerlesbares Speichermedium, umfassend Anweisungen, die einen Server-Computer zur Ausführung eines erfindungsgemäßen Verfahrens veranlassen.

Die Erfindung umfasst ferner eine **Vorrichtung** zur Erstellung einer elektronischen Angebotsliste durch einen Server-Computer zur Übermittlung an einen Client-Computer, umfassend einen Server-Computer. Der Server-Computer ist dazu ausgebildet, von einem Client-Computer eine Anforderung nach Anbietern einer Produktgattung entgegenzunehmen und durch Abfrage einer Benutzerdatenbank oder einer Liefergebietdatenbank den Lieferbereich zu ermitteln.

Der Server-Computer ist ferner dazu ausgebildet, durch Abfrage einer Anbieterdatenbank zumindest einen Anbieter Aⱼ zu ermitteln, die ermittelten Anbieter Aⱼ in einer elektronischen Angebotsliste zusammenzustellen, und an den Client-Computer zu übermitteln. Ferner ist der Server-Computer dazu ausgebildet, vom Client-Computer eine Bestellung eines Produkts entgegenzunehmen und an den betreffenden Anbieter Aⱼ weiterzuleiten.

Erfindungsgemäß ist der Server-Computer dazu ausgebildet, eine vom Server-Computer aktualisierbare Bestellzeitdatenbank bereitzustellen, durch Abfrage der Bestellzeitdatenbank zu prüfen, ob Bestellzeitfenster der ermittelten Anbieter existieren, und gegebenenfalls die Bestellzeitfenster in die Angebotsliste aufzunehmen.

Sofern keine Bestellzeitfenster für den betreffenden Anbieter vorliegen, ist der Server-Computer dazu ausgebildet, ein neues Bestellzeitfenster für diesen Anbieter zu erstellen, sobald eine neue Bestellung aufgegeben wird. Der Server-Computer kann ferner dazu ausgebildet sein, die Anbieter in der Angebotsliste in der Reihenfolge der zeitlich am frühesten endenden Bestellzeitfenster zu sortieren.

Die Erfindung betrifft ferner die Verwendung eines erfindungsgemäßen Verfahrens und/oder einer erfindungsgemäßen Vorrichtung zur Erstellung und Versendung von elektronischen Angebotslisten in einem Fabrikgebäude mit einer Vielzahl geografisch verteilter Client-Computer und einer Vielzahl geografisch verteilter Warenlager, welche als Anbieter der benötigten Waren fungieren.

Weitere erfindungsgemäße Merkmale ergeben sich aus den Ansprüchen, den Figuren und den nachfolgend beschriebenen Ausführungsbeispielen.

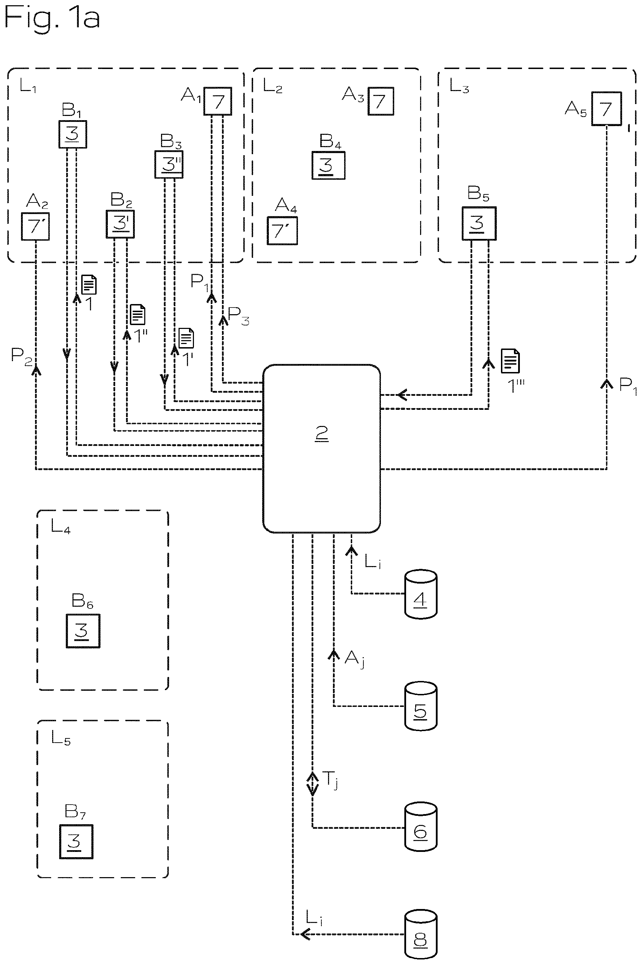

Die Erfindung wird nachfolgend anhand von Ausführungsbeispielen näher erläutert. Figs. 1a - 1c schematische Darstellungen von Ausführungsformen erfindungsgemäßer Vorrichtungen.

**Fig. 1a** zeigt eine schematische Darstellung einer ersten Ausführungsform einer erfindungsgemäßen Vorrichtung am Beispiel von Essenslieferungen.

Gezeigt ist ein Server-Computer 2, der über ein Netzwerk, beispielsweise das Internet, mit mehreren Client-Computern 3, 3′, 3ʺ und Anbieter-Computern 7, 7′, 7ʺ, 7‴, 7ʺʺ in Verbindung steht. Die Client-Computer und Anbieter-Computer befinden sich in verschiedenen Lieferbereichen L₁, L₂, L_{3,} L_{4,} L_{5,}.

Am Server-Computer 2 ist eine Benutzerdatenbank 4 vorgesehen, die beispielsweise folgenden Aufbau haben kann:

| Benutzerdatenbank 4 | | |
|---|---|---|
| Benutzer | Lieferadresse | Lieferbereich |
| B₁ | Am Graben 5/1/60, 1010 Wien | L₁ |
| B₂ | Schwedenplatz 5/13, 1010 Wien | L₁ |
| B₃ | Gonzagagasse 1/1/12, 1010 Wien | L₁ |
| B₄ | Heiligenstädter Straße 173, 1190 Wien | L₂ |
| B₅ | Passauer Straße 15, 3433 Königstetten | L₃ |
| B₆ | Barichgasse 8/2/7, 1030 Wien | L₄ |
| B₇ | Hartlgasse 14/1/5, 1200 Wien | L₅ |
| ··· | ··· | ··· |

Die Client-PCs bzw. deren Benutzer haben sich dazu vorab an einem, vom Server-Computer 2 bereitgestellten Online-Dienst angemeldet, um in die Benutzerdatenbank 4 aufgenommen zu werden. Die eingegebenen Lieferadressen werden vom Server-Computer 2 vordefinierten Lieferbereichen zugeordnet, bei denen es sich beispielsweise um einen Bezirk, eine Gemeinde oder eine Stadt handeln kann.

Zu diesem Zweck ist eine Liefergebietdatenbank 8 vorgesehen, welche einer Zuordnung der jeweiligen Adressen in separate Liefergebiete ermöglicht. Im vorliegenden Beispiel sind die Benutzer anhand ihrer Adressen fünf getrennten Liefergebieten L₁ - L₅ zugeordnet. Am Server-Computer 2 ist ferner eine Anbieterdatenbank 5 vorgesehen, welche Anbieter-PCs mit ihren Liefergebieten und den angebotenen Produkten umfasst. In diesem Ausführungsbeispiel ist in der Datenbank auch die Zeitdauer der Bestellzeitfenster Δt und die maximale Anzahl der Bestellungen je Bestellzeitfenster Kⱼ hinterlegt.

Die Anbieterdatenbank kann beispielsweise folgenden Aufbau haben:

| Anbieterdatenbank 5 | | | | |
|---|---|---|---|---|
| Anbieter | Produkte | Lieferbereich | Δt | Kⱼ |
| A₁ | P₁, P₂ P₃ | L₁ | 25 min | 5 |
| A₂ | P₂, P₃, P₄ | L₁ | 20 min | 5 |
| A₃ | P₁ | L₂ | 15 min | 7 |
| A₄ | P₃ | L₂ | 20 min | 4 |
| A₅ | P₁, P₄ | L₃ | 30 min | 4 |
| ··· | ··· | ··· | ··· | ··· |

Die Anbieter-PCs bzw. Produkthersteller / Lieferdienste haben sich vorab an einem, vom Server-Computer 2 bereitgestellten Online-Dienst angemeldet, um in die Anbieterdatenbank 5 aufgenommen zu werden. Die Produkte und Lieferbereiche werden dem Server-PC von den Anbieter-PCs zur Verfügung gestellt. Die Produkte können Einzelprodukte oder Produktkategorien sein, beispielsweise italienisches, chinesisches, österreichisches Essen oder dergleichen. Einzelprodukte können mit Preisen in der Anbieterdatenbank gespeichert sein.

Der Server-Computer 2 ist dazu ausgebildet, von einem Client-Computer 3, 3', 3" eines Benutzers eine Anforderung nach einer Bestellung entgegenzunehmen, und durch Abfrage der Benutzerdatenbank 4 einen dem Client-Computer 3, 3', 3" oder dessen Benutzer zugeordneten Lieferbereich Lᵢ zu ermitteln.

Der Server-Computer 2 ist ferner dazu ausgebildet, durch Abfrage der Anbieterdatenbank 5 Anbieter Aⱼ für den Lieferbereich Lᵢ, in dem sich der Client-Computer 3, 3', 3" befindet, zu ermitteln. Der Server-Computer stellt die ermittelten Anbieter Aⱼ des Produkts in einer elektronischen Angebotsliste 1 zusammen.

Ferner stellt der Server-Computer 2 eine aktualisierbare Bestellzeitdatenbank 6 bereit. Die Bestellzeitdatenbank 6 ist dazu ausgebildet, Bestellzeitfenster für jeden Anbieter zu speichern und umfasst alle zum aktuellen Zeitpunkt bei den Anbietern offenen Bestellzeitfenster Tⱼ. Die Bestellzeitfenster sind durch eine Startzeit tₛₜₐᵣₜ und eine Endzeit t_{end} definiert. Der Zeitraum Δt = t_{end} - tₛₜₐᵣₜ ist durch die jeweiligen Anbieter vordefiniert und beträgt beispielsweise 20 Minuten.

Für die Bereitstellung der elektronischen Angebotslisten 1 für Lieferung oder Abholung sortiert der Server-PC die ermittelten Anbieter Aⱼ in der Angebotsliste in der Reihenfolge der zeitlich am frühesten endenden Bestellzeitfenster Tⱼ. Eine entsprechende Angebotsliste 1 für Lieferung oder Abholung hat beispielsweise zum Zeitpunkt t = 13:05 das folgende Aussehen:

| Anbieter | Bestellzeitfenster Lieferung Tⱼ |
|---|---|
| A₃ | 12:50 - 13:15 |
| A₁ | 13:00 - 13:30 |
| A₂ | - |

Die Angebotsliste 1 für Lieferung ist auf jene Anbieter beschränkt, die in den Lieferbereich des Client-PCs liefern, von dem die Anfrage stammt. Hingegen umfasst die Angebotsliste 1 für Abholung alle Anbieter. Es werden stets jene Anbieter in der Angebotsliste nach oben gereiht, deren Bestellzeitfenster früher enden.

**Fig. 1a** illustriert ein erstes Ausführungsbeispiel des Ablaufs eines erfindungsgemäßen Verfahrens in einer erfindungsgemäßen Vorrichtung, wobei hier lediglich Bestellzeitfenster für Lieferungen Tⱼ vorgesehen sind. Durch die unterschiedlichen Lieferbereiche ergibt sich, dass die verschiedenen Benutzer nur bei jenen Anbietern Lieferungen bestellen können, in deren Liefergebiet sie sich befinden.

Die Bestellzeitdatenbank ist zum Zeitpunkt t = 17:05 beispielsweise leer, das heißt bei keinem der Anbieter wurde bislang ein Bestellzeitfenster geöffnet.

**Um 17:05** stellt der Benutzer B₁ eine Anforderung an den Server-PC. Dieser liefert eine Angebotsliste 1 mit jenen Anbietern, die sein Liefergebiet bedienen können, nämlich A₁ und A₂.

Die gesendete Angebotsliste 1 hat in diesem Ausführungsbeispiel folgenden Aufbau:

| Angebotsliste 1 für B₁ (t = 17:05) | |
|---|---|
| Anbieter | Bestellzeitfenster Lieferung |
| A₁ | - |
| A₂ | - |

Der Benutzer bestellt beim Anbieter A₂ das Produkt P₂ und öffnet damit ein Bestellzeitfenster bei diesem Anbieter. Der Anbieter hat einen Bestellzeitraum von 20 Minuten definiert, sodass für dieses Bestellzeitfenster tₛₜₐᵣₜ = 17:05 und t_{end} = 17:25 gesetzt werden. Der Server-Computer 2 leitet die Bestellung des Produkts P₂ an den Anbieter A₂ weiter.

**Um 17:10** stellt der Benutzer B₃ eine Anforderung an den Server-Computer. Zu diesem Zeitpunkt ist für seinen Lieferbereich ein Bestellzeitfenster offen, nämlich beim Anbieter A₂ bis 17:25. Der Server-Computer erstellt eine Angebotsliste 1', in der dieser Anbieter nach oben gereiht ist:

| Angebotsliste 1' für B₃ (t = 17:10) | |
|---|---|
| Anbieter | Bestellzeitfenster Lieferung |
| A₂ | 17:05 - 17:25 |
| A₁ | - |

Der Benutzer B₃ tätigt eine Bestellung des Produkts P₁ beim Anbieter A₁. Der Anbieter A₁ hat einen Bestellzeitraum von 25 Minuten definiert, sodass tₛₜₐᵣₜ = 17:10 und t_{end} = 17:35. Der Server-Computer 2 leitet die Bestellung P₁ an den Anbieter A₁ weiter.

**Um 17:22** stellt der Benutzer B₂ eine Anforderung an den Server-Computer 2. Zu diesem Zeitpunkt sind Bestellzeitfenster bei A₁ und A₂ offen.

Der Server-Computer 2 sortiert die Anbieter der Angebotsliste 1" für B₂ in der Reihenfolge der Endzeiten t_{end} der Bestellzeitfenster, wobei früher endende Bestellzeitfenster Tⱼ weiter oben angeführt sind:

| Angebotsliste 1ʺ für B₂ (t = 17:22) | |
|---|---|
| Anbieter | Bestellzeitfenster Lieferung |
| A₂ | 17:05 - 17:25 |
| A₁ | 17:10 - 17:35 |

Der Benutzer tätigt eine Bestellung des Produkts P₃ beim Anbieter A₁, sodass im Bestellzeitfenster für Anbieter A₁ nun zwei Bestellungen enthalten sind - d.h. die zweite Bestellung wird in das bestehende Bestellzeitfenster aufgenommen. Der Server-Computer 2 stellt sicher, dass die maximale Anzahl Kⱼ der Bestellungen pro Bestellzeitfenster nicht überschritten wird. Der Server-Computer 2 leitet die Bestellung von P₃ an den Anbieter A₁ weiter.

**Um 17:45** stellt der Benutzer B₅ eine Anforderung an den Server-Computer. Nur der Anbieter A₅ liefert in das Liefergebiet dieses Benutzers, sodass die Angebotsliste 1‴ für B₅ nur diesen Anbieter umfasst:

| Angebotsliste 1‴ für B₅ (t = 17:45) | |
|---|---|
| Anbieter | Bestellzeitfenster Lieferung |
| A₅ | - |

Der Benutzer B₅ tätigt eine Bestellung des Produkts P₁ bei Anbieter A₅ und öffnet damit das Bestellzeitfenster Tⱼ bei diesem Anbieter. Der Anbieter A₅ hat einen Bestellzeitraum von 30 Minuten definiert, sodass für dieses Bestellzeitfenster tₛₜₐᵣₜ = 17:45 und t_{end} = 18:15 gilt. Der Server-Computer 2 leitet die Bestellung von P₁ an A₅ weiter.

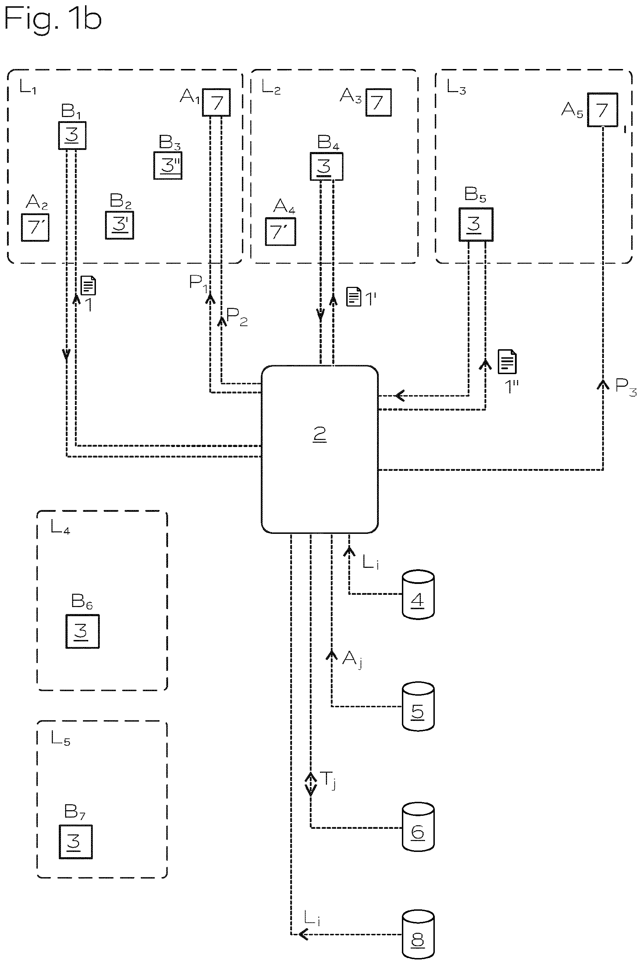

**Fig. 1b** zeigt eine schematische Darstellung einer zweiten Ausführungsform einer erfindungsgemäßen Vorrichtung. In diesem Ausführungsbeispiel sind lediglich Bestellzeitfenster für Abholungen Tⱼ' vorgesehen.

Der grundsätzliche Aufbau der Vorrichtung sowie der Inhalt der Benutzerdatenbank 4 und der Anbieterdatenbank 5 entsprechen dem Ausführungsbeispiel gemäß Fig. 1a.

In diesem Ausführungsbeispiel kann jeder Benutzer seine Bestellung, unabhängig vom Lieferbereich, bei jedem Anbieter abholen. In der Angebotsliste werden jedoch, wie im Ausführungsbeispiel von Fig. 1a, zunächst nur Anbieter im Lieferbereich des jeweiligen Benutzers angezeigt, unter der Annahme, dass Benutzer bevorzugt bei Anbietern in ihrer Nähe Abholungen tätigen. Die Reihung in der Angebotsliste ist wiederum derart, dass zunächst Anbieter mit offenem Bestellzeitfenster Tⱼ′ angezeigt werden, danach Anbieter ohne offenes Bestellzeitfenster. Unter den offenen Bestellzeitfenstern Tⱼ′ werden die früher endenden nach oben gereiht.

Die Bestellzeitdatenbank 6 ist zum Zeitpunkt t = 17:05 beispielsweise leer, das heißt bei keinem der Anbieter wurde ein Bestellzeitfenster für Abholung Tⱼ′ geöffnet.

**Um 17:05** stellt der Benutzer B₁ eine Anforderung an den Server-PC 2. Dieser sendet eine Angebotsliste 1 mit jenen Anbietern zurück, die sein Liefergebiet bedienen, nämlich A₁ und A₂. Die Angebotsliste 1 ist unsortiert, da noch kein Bestellzeitfenster Tⱼ′ geöffnet wurde:

| Angebotsliste 1 für B₁ (t = 17:05) | |
|---|---|
| Anbieter | Bestellzeitfenster Abholung |
| A₁ | - |
| A₂ | - |

Der Benutzer bestellt Produkt P₁ beim Anbieter A₁ und öffnet damit ein Bestellzeitfenster für Abholung Tⱼ′ bei diesem Anbieter. Der Anbieter hat einen Bestellzeitraum von 25 Minuten definiert, sodass für dieses Bestellzeitfenster die Werte tₛₜₐᵣₜ = 17:05 und t_{end} = 17:30 gesetzt werden.

**Um 17:10** stellt der Benutzer B₄ eine Anforderung an den Server-Computer 2. Dem Benutzer B₄ werden die Anbieter A₃ und A₄ in der Angebotsliste für Abholung angezeigt, da sein Wohnort in das Liefergebiet dieser Anbieter fällt. Der Benutzer B₄ hat jedoch ein Lieblingsrestaurant - den Anbieter A₁, wofür er eine längere Anfahrtszeit zur Abholung in Kauf nimmt. Deswegen sucht der Benutzer B₄ spezifisch nach dem Anbieter A₁ und bekommt in einem dafür bereitgestellten Reiter "Abholung" nun auch diesen Anbieter, der eigentlich in ein anderes Liefergebiet fällt, für Abholung angezeigt:

| Angebotsliste 1′ für B₄ (t = 17:10) | |
|---|---|
| Anbieter | Bestellzeitfenster Abholung |
| A₁ | 17:05 - 17:30 |
| A₃ | - |
| A₄ | - |

Der Benutzer tätigt seine Bestellung des Produkts P₂ beim Anbieter A₁ innerhalb des bereits vom Benutzer B₁ geöffneten Bestellzeitfensters.

Es befinden sich zu diesem Zeitpunkt also zwei offene Bestellungen im Bestellzeitfenster für Abholung Tⱼ′ beim Anbieter A₁. Wiederum prüft der Server-Computer 2, dass keine Überschreitung der maximalen Anzahl an Bestellung Kⱼ erfolgt.

**Um 17:45** stellt der Benutzer B₅ eine Anforderung an den Server-Computer. Aufgrund seiner Lieferadresse wird diesem Benutzer nur der Anbieter A₅ aus dem Liefergebiet L₃ angezeigt:

| Angebotsliste 1ʺ für B₅ (t = 17:45) | |
|---|---|
| Anbieter | Bestellzeitfenster Abholung |
| A₅ | - |

Der Benutzer tätigt die Bestellung des Produkts P₃ bei Anbieter A₅ und öffnet damit ein neues Bestellzeitfenster für Abholung Tj' bei diesem Anbieter. Der Anbieter A₅ hat einen Bestellzeitraum von 30 Minuten definiert, sodass für dieses Bestellzeitfenster tₛₜₐᵣₜ = 17:45 und t_{end} = 18:15 gilt.

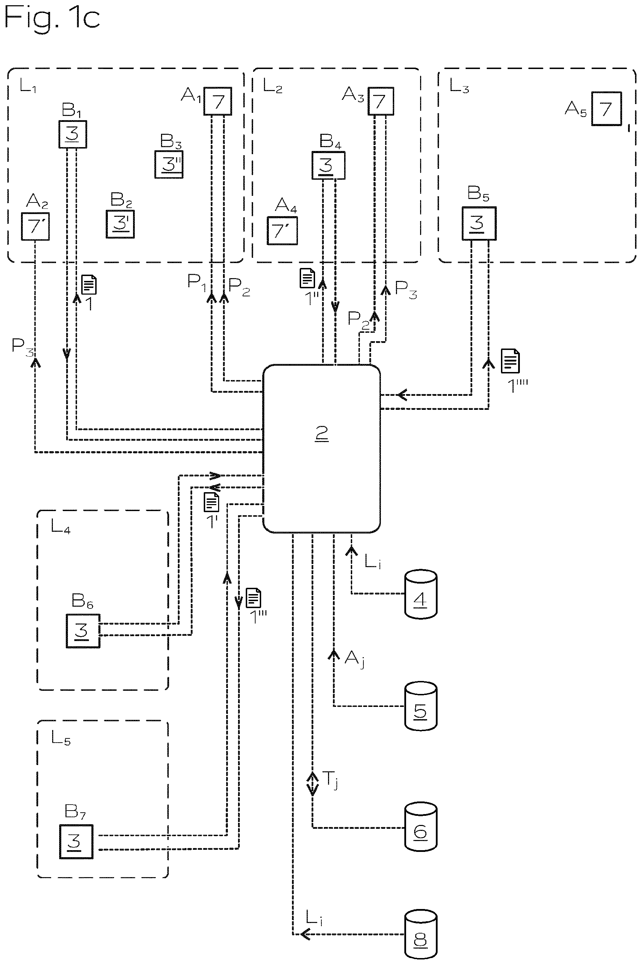

**Fig. 1c** zeigt eine schematische Darstellung einer dritten Ausführungsform einer erfindungsgemäßen Vorrichtung. In diesem Ausführungsbeispiel sind sowohl Bestellzeitfenster für Lieferungen Tⱼ als auch Bestellzeitfenster für Abholungen Tⱼ′ unabhängig voneinander vorgesehen.

Der Server-Computer 2 ist in diesem Ausführungsbeispiel dazu ausgebildet, durch Abfrage der Bestellzeitdatenbank 6, zu prüfen, ob bereits Bestellzeitfenster Tⱼ der ermittelten Anbieter Aⱼ existieren, sei es für Lieferung in den, dem Benutzer zugeordneten Lieferbereich Lᵢ, oder für Abholung beim Anbieter direkt. Sofern Bestellzeitfenster Tⱼ bzw. Tⱼ′ offen sind, nimmt der Server-Computer 2 diese in die Angebotsliste 1 auf und übermittelt sie an die Client-Computer 3. Ist für einen Anbieter noch kein Bestellzeitfenster in der Bestellzeitdatenbank 6 angelegt, so erstellt der Server-PC 2 ein neues Bestellzeitfenster Tⱼ bzw. Tⱼ′, sobald eine Bestellung für Lieferung oder Abholung eingeht. Den Benutzern werden die Bestellzeitfenster für Lieferung Tⱼ und die Bestellzeitfenster für Abholung Tⱼ′ in unterschiedlichen Bildschirmfenstern oder Reitern dargestellt.

Beispielsweise sendet der Benutzer B₁ um 17:05 eine Anfrage für Lieferung. Aufgrund seiner Adresse werden ihm in der Angebotsliste 1 die Anbieter A₁ und A₂ angezeigt. Er tätigt seine Bestellung des Produkts P₁ beim Anbieter A₁ und öffnet damit ein Bestellzeitfenster für Lieferung Tⱼ bei diesem Anbieter. Der Anbieter A₁ hat einen Bestellzeitraum von 25 Minuten definiert, sodass für das Liefer-Bestellzeitfenster beim Anbieter A₁ gilt: tₛₜₐᵣₜ = 17:05 und t_{end} = 17:30. Der Server-Computer 2 leitet die Bestellung von P₁ an den Anbieter A₁ weiter.

Gleichzeitig sendet der Benutzer B₆ eine Anfrage für Lieferung. Da für sein Liefergebiet keine Anbieter in der Anbieterdatenbank gefunden werden, wird dem Benutzer lediglich die Möglichkeit der Abholung gegeben; die Angebotsliste 1' ist leer. Er wählt selbst Anbieter A₃ aus (beispielsweise durch eine Suchfunktion) und tätigt eine Bestellung von Produkt P₂ beim Anbieter A₃ zur Abholung. Der Server-Computer 2 öffnet ein Bestellzeitfenster für Abholung bei A₃. Dieser Anbieter hat einen Bestellzeitraum von 15 Minuten definiert, sodass das Bestellzeitfenster für Abholung mit tₛₜₐᵣₜ = 17:05 und t_{end} = 17:20 erzeugt wird. Die Bestellzeitdatenbank 6 hat nun also ein Bestellzeitfenster für Lieferung Tⱼ bei A₁ und ein Bestellzeitfenster für Abholung Tⱼ′ bei A₃. Der Server-Computer 2 leitet die Bestellung von P₂ an den Anbieter A₃ weiter.

Um **17:10** sendet der Benutzer B₄ eine Anfrage an den Server-PC. Auf Grundlage seines Liefergebiets kommen die Anbieter A₃ und A₄ für Lieferung in Frage. Der Server-PC übermittelt die folgende Angebotsliste 1ʺ für Lieferung Tⱼ bzw. Abholung Tⱼ′:

| Angebotsliste 1ʺ für B₄ (t = 17:10) | | |
|---|---|---|
| Anbieter | Bestellzeitfenster Lieferung Tⱼ | Bestellzeitfenster Abholung Tⱼ′ |
| A₃ | | 17:05 - 17:20 |
| A₄ | | |

Der Benutzer B₄ entscheidet sich für eine Lieferung vom Anbieter A₃ und tätigt seine Bestellung des Produkts P₃, sodass ein Bestellzeitfenster für Lieferung Tⱼ beim Anbieter A₃ erstellt wird. Dieser hat einen Bestellzeitraum von 15 Minuten definiert, sodass das Bestellzeitfenster für Lieferung bei A₂ von 17:10 bis 17:25 reicht. Der Server-Computer 2 leitet die Bestellung von P₃ an den Anbieter A₃ weiter.

Um **17:24** sendet der Benutzer B₇ eine Anfrage an den Server-PC. Auf Grundlage seines Liefergebiets wird ihm weder Lieferung, noch Abholung vorgeschlagen; seine Angebotsliste 1‴ ist leer. Der Benutzer sucht jedoch spezifisch nach dem Anbieter A₁ und tätigt dort eine Bestellung für Abholung des Produkts P₂. Der Anbieter A₁ hat einen Bestellzeitraum von 25 Minuten definiert, das Bestellzeitfenster für Abholung Tⱼ′ bei Anbieter A₁ ist also: tₛₜₐᵣₜ = 17:24 und t_{end} = 17:49. Der Server-Computer 2 leitet die Bestellung von P₂ an den Anbieter A₁ weiter.

Um **17:40** sendet der Benutzer B₅ eine Anfrage an den Server-Computer 2. Auf Grundlage des Liefergebiets würde ihm nur Anbieter A₅ vorgeschlagen. Der Benutzer B₅ sucht jedoch spezifisch nach dem Produkt P₃ des Anbieters A₂ aus Liefergebiet L₁ und erhält folgende Angebotsliste 1ʺʺ:

| Angebotsliste 1ʺʺ für B₅ (t = 17:40) | | |
|---|---|---|
| Anbieter | Bestellzeitfenster Lieferung Tⱼ | Bestellzeitfenster Abholung Tⱼ′ |
| A₂ | | |
| A₅ | | |

Der Anbieter A₂ hat einen Bestellzeitraum von 20 Minuten definiert, es wird also ein Bestellzeitfenster für Abholung Tⱼ′ mit tₛₜₐᵣₜ = 17:40 und t_{end} = 18:00 erzeugt. Der Server-Computer 2 leitet die Bestellung des Produkts P₃ an den Anbieter A₂ weiter.

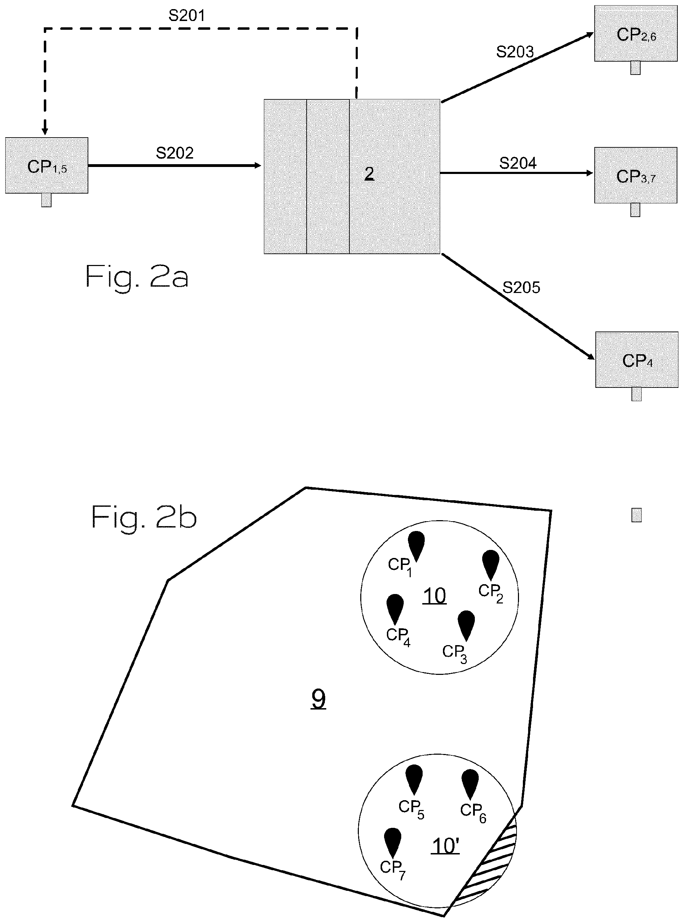

**Fig. 2** zeigt eine schematische Darstellung einer weiteren Ausführungsform eines erfindungsgemäßen Verfahrens. In dieser Ausführungsform ist das Liefergebiet 9 unterteilt in einzelne Subliefergebiete 10, 10'. Bei den Subliefergebieten 10, 10' kann es sich um einzelne Gemeinden, Bezirke, aber auch Häuserblöcke, Lagerhallen oder Arbeitsstationen in einer Fabrik handeln. In jedem Subliefergebiet 10, 10' befinden sich einzelne Client-Computer. Beispielsweise befinden sich im Subliefergebiet 10 die Client-Computer CP₁, CP₂, CP₃ und CP₄; im Subliefergebiet 10' befinden sich die Client-Computer CP₅, CP₆ und CP₇.

In einem ersten Schritt ordert der Client-Computer CP₁ beim Server-Computer 2 Waren zur Lieferung. Der Server 2 prüft, ob die Lieferadresse des CP₁ in das Liefergebiet 9 der am Server hinterlegten Anbieter-Computer fällt.

Dieser Abgleich erfolgt über eine Schnittstelle mit einem Geo-Informationssystem, z.B. Google Maps, und Verwendung der Liefergebietdatenbank 8. Stellt der Server hierbei eine Überschreitung fest, wird dieser Teil nicht zu dem Subliefergebiet hinzugefügt und in dem entsprechenden Gebiet nicht zur Verfügung (schraffierter Bereich).

Im zweiten Schritt prüft der Server 2, ob in einem vorbestimmten Radius um die Lieferadresse des Client-Computers CP₁ bereits ein Bestellzeitfenster eröffnet wurde. Wurde noch kein Bestellzeitfenster eröffnet, wird dem Client-Computer CP₁ zunächst eine ungeordnete Angebotsliste 1 übermittelt (Schritt **S201).** Der Radius ist in der Liefergebietdatenbank 8 vordefiniert.

Sobald CP₁ seine Order erfolgreich tätigt, werden die Daten des CP₁ mittels PHP-Files, die eine HTML-Struktur beinhalten, an den Server-Computer 2 übermittelt (Schritt **S202).** Sobald der Server-Computer 2 die Anfrage erhält und weiterverarbeitet, werden allen Client-Computern, die sich in dem durch CP₁ generierten Lieferradius befinden, geordnete Angebotslisten zur Verfügung gestellt, welche das von CP1 initiierte Bestellzeitfenster an erster Stelle beinhalten (Schritte **S203 - S205).**

Es wird also innerhalb des Liefergebietes 9 durch die Initialbestellung des CP₁ ein temporäres Subliefergebiet 10 durch den Server automatisiert erstellt. Ab dem Zeitpunkt der Bestellung durch CP₁ erstellt der Server ein Bestellzeitfenster mit einer vordefinierten Zeitdauer Δt = TS₁. Innerhalb von TS₁ können sich Benutzer, die sich im Lieferradius des Subliefergebiets 10 befinden, anschließen. Beispielsweise wird durch eine Order des Client-Computers CP₁ um 13:00 eine Zeitdauer von 10 min definiert, und weitere Orders von CP₂, CP₃ und CP₄ werden um 13:02, 13:05 und 13:09 entgegengenommen.

Der Client-Computer CP₅, der außerhalb des Subliefergebietes 10, aber innerhalb des Liefergebiets 9 liegt, kann den Prozess ebenfalls für durch eine Initialbestellung auslösen und ein eigenes Subliefergebiete 10' erstellen. Dieses steht den benachbarten Client-Computern CP₆ und CP₇ zur Verfügung. Das Subliefergebiet wird nach Ablauf einer vorbestimmten Zeit vom Server-Computer 2 automatisch geschlossen. Beispielsweise wird durch eine Order des Client-Computers CP₅ um 13:02 eine Zeitdauer von TS₁ = 10 min definiert, und weitere Orders von CP₆ und CP₇ werden um 13:08, 13:10 entgegengenommen. Mit Erstellung jedes neuen Bestellzeitfensters für ein bestimmtes Subliefergebiet 10, 10' werden alle Client PCs in diesem temporären Subliefergebiet 10, 10' mittels einer elektronischen Nachricht automatisiert benachrichtigt (sofern sie die Freigabe dafür erteilt haben). Dabei ermittelt der Server die entsprechenden Voreinstellungen auf den einzelnen Endgeräten, überprüft die Adressdaten innerhalb des relevanten Radius und prüft, ob schon mehrere Nachrichten innerhalb eines bestimmten Zeitraumes in dem Gebiet an idente Endgeräte gesendet wurden.

Die Bestellungen werden vom Server-Computer 2 automatisiert an die Anbieter-Computer weitergeleitet, und es werden die für die Auslieferung relevanten Daten übermittelt. Anschließend ermittelt der Server-Computer 2 anhand der Orderdaten und der Echtzeitverkehrsdaten eine Route, um die georderten Waren effizient und schnell an die Benutzer auszuliefern.

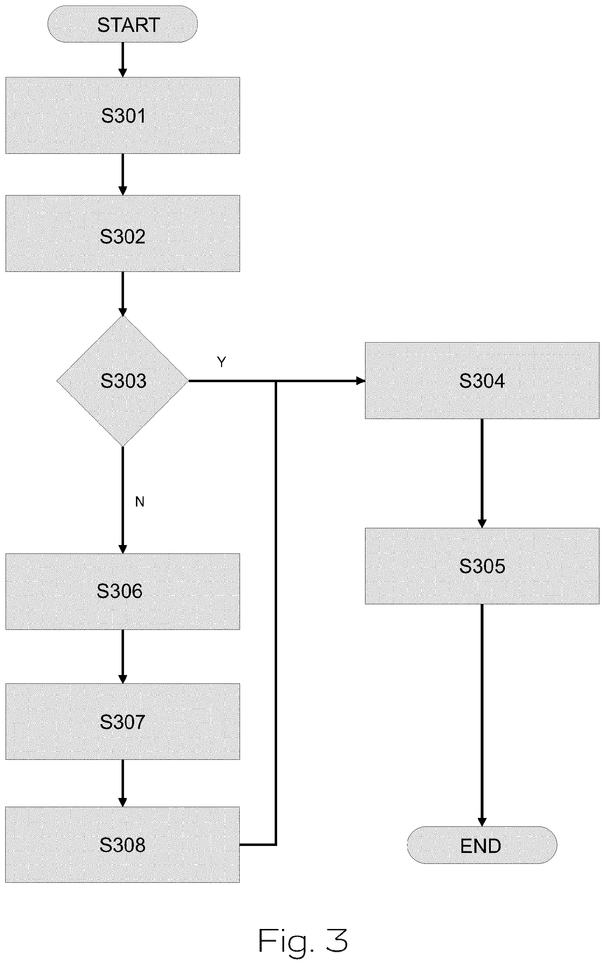

**Fig. 3** zeigt ein schematisches Ablaufdiagramm für die Erstellung geordneter und ungeordneter Angebotslisten. In Schritt **S301** besucht der Client-Computer eine Website bzw. öffnet eine Applikation. In Schritt **S302** legt der Client-Computer seine Lieferadresse fest. Der Server-Computer prüft in Schritt **S303** ob ein Zeitschlitz mit einem Bestellzeitfenster für das betreffende Subliefergebiet offen ist. Wenn dies der Fall ist, sendet der Server-Computer dem Client-Computer eine geordnete Angebotsliste (Schritt **S304)** und der Client-Computer sendet seine Order an den Server-Computer (Schritt **S305).** Ist kein Bestellzeitfenster im Subliefergebiet verfügbar, dann sendet der Server-Computer dem Client-Computer eine ungeordnete Angebotsliste (Schritt **S306).** Der Client-Computer sendet eine Order an den Server-Computer (Schritt **S307),** worauf der Server-Computer eine geordnete Angebotsliste für das Subliefergebiet mit einem Zeitschlitz neu erstellt (Schritt **S308)** und mit Schritt **S304** fortsetzt.

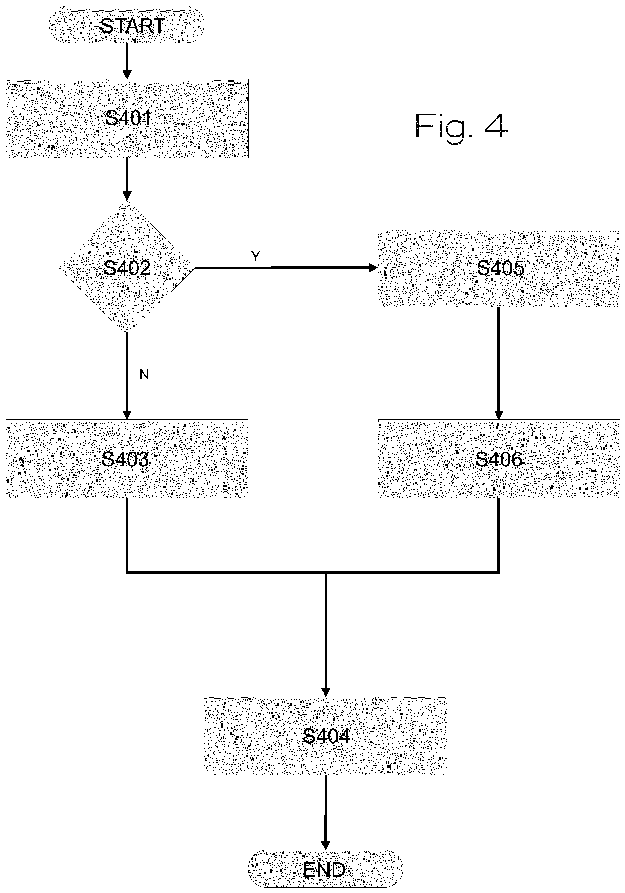

**Fig. 4** zeigt ein schematisches Ablaufdiagramm für die Erstellung von Routendaten nach Ablauf der Zeitdauer Δt an die Anbieter-Computer zur Ermöglichung einer effizienten Auslieferung der georderten Waren.

In Schritt **S401** übermittelt der Server-Computer alle Bestellungen an die Anbieter-Computer. In Schritt **S402** prüft der Server-Computer, ob Orders an mehrere Client-Computer enthalten sind. Ist dies nicht der Fall, bestimmt der Server-Computer die Adresse des einzigen Client-Computers durch Abfrage eines Geo-Informationssystems (Schritt **403),** erstellt Routendaten und übermittelt die Routendaten an den betreffenden Anbieter-Computer (Schritt **S404).** Umfasst der Zeitschlitz mehrere Client-Computer, dann bestimmt der Server-Computer die Adresse der betreffenden Client-Computer (Schritt **S405)** und erstellt eine Routenplanung anhand von Bestelldaten und Verkehrsdaten (Schritt **S406).** Das Verfahren setzt mit Schritt **S404** fort.

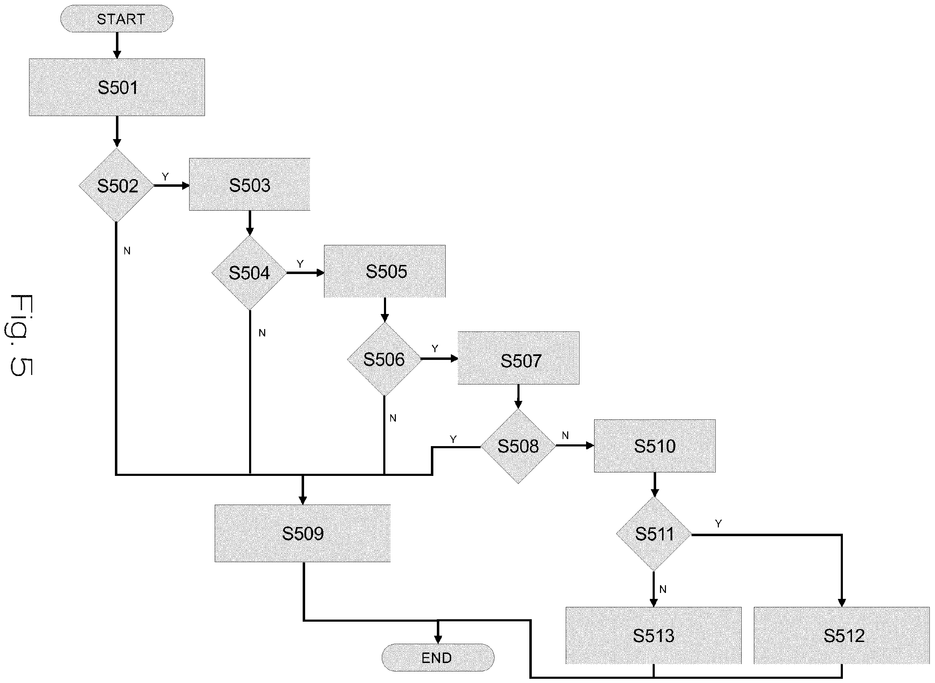

**Fig. 5** zeigt ein schematisches Ablaufdiagramm für die Erstellung von elektronischen Nachrichten an Client-Computer in einem Subliefergebiet. In Schritt **S501** erhält der Server eine Order von einem Client-Computer. Der Server prüft, ob der Client-Computer innerhalb eines Subliefergebiets liegt (Schritt **S502).** Ist dies nicht der Fall, verschickt der Server-Computer keine Nachricht (Schritt **S509)** und das Verfahren endet. Liegt der Client-Computer innerhalb eines Subliefergebiets, dann prüft der Server-Computer, ob für die Client-Computer in diesem Subliefergebiet die Versendung von elektronischen Nachrichten freigegeben wurde (Schritte **S503** und **S504).** Wurde die Freigabe erteilt, dann prüft der Server-Computer, ob ein Zeitraum dafür festgelegt wurde (Schritte **S505** und **S506).** Liegt der aktuelle Zeitpunkt innerhalb des freigegebenen Zeitraums, so prüft der Server-Computer bei allen Client-Computern des Subliefergebiets, ob bereits eine Order aufgegeben wurde (Schritte **S507** und **S508).** Ist dies nicht der Fall, dann prüft der Server-Computer weiter, ob für die Client-Computer ein bevorzugter Anbieter definiert wurde (Schritte **S510** und **S511).** Wurde kein bevorzugter Anbieter definiert, dann verschickt der Server-Computer elektronische Nachrichten an die Client-Computer, dass im Subliefergebiet ein Bestellzeitfenster eröffnet wurde (Schritt **S513).** Wurden hingegen bevorzugte Anbieter definiert, dann weist der Server-Computer in den elektronischen Nachrichten auf die bevorzugten Anbieter in diesem Subliefergebiet hin (Schritt **S512).**

Die Erfindung beschränkt sich nicht auf die vorliegenden Ausführungsbeispiele sondern umfasst sämtliche Verfahren und Vorrichtungen im Rahmen der nachfolgenden Patentansprüche.

### Bezugszeichenliste

- 1: Angebotsliste
- 2: Server-Computer
- 3, 3', 3": Client-Computer
- 4: Benutzerdatenbank
- 5: Anbieterdatenbank
- 6: Bestellzeitdatenbank
- 7, 7', 7": Anbieter-Computer
- 8: Liefergebietdatenbank
- 9: Liefergebiet
- 10, 10′: Subliefergebiet

## Patentansprüche

1. Computerimplementiertes Verfahren zur Erstellung einer elektronischen Angebotsliste (1) durch einen Server-Computer (2) zur Übermittlung an einen Client-Computer (3, 3', 3"), umfassend die folgenden, durch den Server-Computer (2) durchgeführten Schritte:
a. Entgegennahme, von einem Client-Computer (3, 3', 3"), einer Anfrage nach einer Produktgattung,
b. Bestimmung, durch Abfrage einer Benutzerdatenbank (4) oder einer Liefergebietdatenbank (8), eines dem Client-Computer (3, 3', 3") oder dessen Benutzer zugeordneten Lieferbereichs Li,
c. Ermittlung, durch Abfrage einer Anbieterdatenbank (5), zumindest eines Anbieters Aⱼ der Produktgattung für den Lieferbereich Lᵢ,
d. Zusammenstellung der ermittelten Anbieter Aⱼ in einer elektronischen Angebotsliste (1),
e. Übermittlung der Angebotsliste (1) an den Client-Computer (3, 3', 3"),
f. Entgegennahme, von dem Client-Computer (3, 3', 3"), einer Bestellung eines Produkts P bei einem Anbieter Aⱼ,
g. Weiterleitung der Bestellung an den Anbieter Aⱼ,
**dadurch gekennzeichnet, dass** das Verfahren die folgenden Schritte umfasst:
h. Bereitstellung einer vom Server-Computer (2) aktualisierbaren Bestellzeitdatenbank (6) zur Aufnahme von Bestellzeitfenstern Tⱼ für die Entgegennahme von Bestellungen bei den Anbietern Aⱼ,
i. Prüfung, durch Abfrage der Bestellzeitdatenbank (6), ob für die ermittelten Anbieter Aⱼ offene Bestellzeitfenster Tⱼ existieren, und gegebenenfalls Aufnahme des Bestellzeitfenster Tⱼ in die Angebotsliste (1), und
j. bei Entgegennahme einer Bestellung bei einem Anbieter Aⱼ, für den noch kein Bestellzeitfenster Tⱼ in der Bestellzeitdatenbank (6) existiert, Erstellen eines Bestellzeitfensters Tⱼ für diesen Anbieter Aⱼ.

2. Verfahren nach Anspruch 1, **dadurch gekennzeichnet, dass** in der Angebotsliste (1) jene Anbieter Aⱼ mit offenen Bestellzeitfenstern Tⱼ nach oben gereiht werden.

3. Verfahren nach Anspruch 1 oder 2, **dadurch gekennzeichnet, dass** in der Angebotsliste (1) die Anbieter Aⱼ in der Reihenfolge der am frühesten endenden Bestellzeitfenster Tⱼ sortiert werden.

4. Verfahren nach einem der Anprüche 1 bis 3, **dadurch gekennzeichnet, dass** vom Server-Computer (2) separate Bestellzeitfenster Tⱼ für die Lieferung von Produkten und Bestellzeitfenster Tⱼ′ für die Abholung von Produkten bereitgestellt werden.

5. Verfahren nach einem der Ansprüche 1 bis 4, **dadurch gekennzeichnet, dass** die Bestellzeitfenster Tⱼ jeweils für eine **Zeitdauer** Δt angelegt werden, wobei die Zeitdauer Δt anbieterspezifisch ist und durch Abfrage der Anbieterdatenbank (5) ermittelt wird.

6. Verfahren nach einem der Ansprüche 1 bis 5, **dadurch gekennzeichnet, dass** für die Bestellzeitfenster Tⱼ eine maximale Anzahl Kⱼ an Bestellungen vorgesehen ist, wobei die Anzahl Kj anbieterspezifisch ist und durch Abfrage der Anbieterdatenbank (5) ermittelt wird, und wobei der Server-Computer (2) prüft, ob die Anzahl der Bestellungen in bestehenden Bestellzeitfenstern Tⱼ die Buchung einer neuen Bestellung erlaubt.

7. Verfahren nach einem der Ansprüche 1 bis 6, **dadurch gekennzeichnet, dass** der Server-Computer (2) beim Eingang einer Bestellung einzelne oder alle in der Benutzerdatenbank (4) angeführte Benutzer aus dem Liefergebiet Lᵢ der Bestellung durch Übermittlung einer **elektronischen Nachricht** informiert und den Client-Computern (3, 3', 3") der Benutzer gegebenenfalls die in diesem Liefergebiet Lᵢ offenen Bestellzeitfenster Tⱼ übermittelt.

8. Verfahren nach Anspruch 7, **dadurch gekennzeichnet, dass** der Server-Computer (2) beim Eingang einer Bestellung innerhalb eines Liefergebiets Lᵢ ein dem bestellenden Client-Computer zugeordnetes **Subliefergebiete SLᵢ** definiert, jene in der Benutzerdatenbank (4) angeführten Client-Computer, die sich im Subliefergebiet SLᵢ befinden, durch Übermittlung einer elektronischen Nachricht von der Bestellung informiert, und diesen Client-Computern die in diesem Subliefergebiet SLᵢ offenen Bestellzeitfenster Tⱼ übermittelt.

9. Verfahren nach einem der Ansprüche 1 bis 8, **dadurch gekennzeichnet, dass** der Server-Computer (2) zur Bestimmung des Lieferbereichs Lᵢ und gegebenenfalls des Sublieferbereichs SLᵢ die Positionsdaten des Client-Computers (3, 3', 3"), insbesondere GPS-Koordinaten, entgegennimmt, die entsprechende Adresse durch Abfrage einer externen Adressdatenbank ermittelt, und das Liefergebiet Lᵢ sowie gegebenenfalls das Subliefergebiet SLᵢ durch Abgleich der Adresse mit vorab in der Liefergebietdatenbank (8) gespeicherten Liefergebietsadressen bestimmt.

10. **Verwendung** eines Verfahrens nach einem der Ansprüche 1 bis 9 zur Erstellung von elektronischen Angebotslisten (1) in einem in einer industriellen Anlage mit einer Vielzahl geografisch verteilter Client-Computer (3, 3', 3") und einer Vielzahl geografisch verteilter Warenlager.

11. **Computerlesbares Speichermedium,** umfassend Anweisungen, die einen Server-Computer (2) zur Ausführung eines Verfahrens nach einem der Ansprüche 1 bis 9 veranlassen.

12. **Vorrichtung** zur Erstellung einer elektronischen Angebotsliste (1) durch einen Server-Computer (2) zur Übermittlung an einen Client-Computer (3, 3', 3"), umfassend einen Server-Computer (2), **dadurch gekennzeichnet, dass** das Server-Computer (2) dazu ausgebildet ist,
a. von einem Client-Computer (3, 3', 3") eine Anforderung nach einer Produktgattung entgegenzunehmen,
b. durch Abfrage einer Benutzerdatenbank (4) oder einer Liefergebietdatenbank (8), einen dem Client-Computer (3, 3', 3") oder dessen Benutzer zugeordneten Lieferbereich Lᵢ zu ermitteln,
c. durch Abfrage einer Anbieterdatenbank (5) zumindest einen Anbieter Aⱼ des gewünschten Produktes P für den Lieferbereich Lᵢ zu ermitteln,
d. die ermittelten Anbieter Aⱼ des Produkts P in einer elektronischen Angebotsliste (1) zusammenzustellen,
e. die Angebotsliste (1) an den Client-Computer (3, 3', 3") zu übermitteln,
f. von dem Client-Computer (3, 3', 3") eine Bestellung eines Produkts P bei einem Anbieter Aⱼ entgegenzunehmen,
g. die Bestellung an den Anbieter Aj weiterzuleiten,
**dadurch gekennzeichnet, dass** der Server-Computer (2) dazu ausgebildet ist,
h. eine aktualisierbare Bestellzeitdatenbank (6) zur Aufnahme von Bestellzeitfenstern Tⱼ für die Entgegennahme von Bestellungen bei den Anbietern Aⱼ bereitzustellen,
i. durch Abfrage der Bestellzeitdatenbank (6) zu prüfen, ob für die ermittelten Anbieter Aⱼ offene Bestellzeitfenster Tⱼ existieren, und gegebenenfalls die Bestellzeitfenster Tⱼ in die Angebotsliste (1) aufzunehmen, und
j. bei Entgegennahme einer Bestellung bei einem Anbieter Aⱼ, für den noch kein Bestellzeitfenster Tⱼ in der Bestellzeitdatenbank (6) existiert, ein Bestellzeitfenster Tⱼ für diesen Anbieter Aⱼ zu erstellen.
